# EUROPÄISCHE PATENTSCHRIFT

(11) **EP 3 420 310 B1**
(45) Veröffentlichungstag und Bekanntmachung des Hinweises auf die Patenterteilung: **09.06.2021**
(21) Anmeldenummer: 16714218.1
(22) Anmeldetag: 22.02.2016
(51) Int. Cl.: G01C 19/38, G01C 19/16

(54) **BANDGEHÄNGTER VOLLMECHANISCHER MERIDIANKREISEL**
TAPE-SUSPENDED FULLY MECHANICAL MERIDIAN GYROSCOPE
GYROSCOPE MÉRIDIEN ENTIÈREMENT MÉCANIQUE SUSPENDU À UN RUBAN

(43) Veröffentlichungstag der Anmeldung: 02.01.2019
(73) Patentinhaber: Erbrich, Klaus, 60486 Frankfurt (DE)
(72) Erfinder: Erbrich, Klaus, 60486 Frankfurt (DE)
(74) Vertreter: Dr. Langfinger & Partner
(86) Internationale Anmeldenummer: PCT/DE2016/100078
(87) Internationale Veröffentlichungsnummer: WO 2017/144032

(56) Entgegenhaltungen:
- DE-A1- 1 548 465
- DE-A1- 1 798 049
- DE-B- 1 284 639
- DE-B4-102015 007 682

## Beschreibung

Die vorliegende Erfindung betrifft einen bandgehängten vollmechanischen Meridiankreisel.

Dieser Kreisel hat die Aufgabe, als Navigationsinstrument Azimutbestimmungen vorzunehmen. Dank der Bandaufhängung des Kreiselkörpers kommt es zu einer Bindung des Kreiselkörpers an das Erdlot. Diese Lotbindung fesselt den Kreisel an die Erde und somit an die Drehbewegung des Erdkörpers. Der Kreisel ist so angeordnet, dass seine Drallachse horizontal steht und das Kreiselrichtmoment von der Drehung des Erdkörpers beeinflusst wird. Nach dem Satz von Foucault vom "gleichsinnigen Parallelismus" erfährt der Kreisel solange eine Störung, bis sich die Drallachse zur Erdachse bewegt hat. Er präzediert nach Nord.

Da der Kreisel mit seiner Kappe über ein Wuchtmoment verfügt, das aus der Drehbewegung resultiert, wird er seine Drallachse über Nord hinausbewegen und somit keine eindeutige Nordanzeige ermöglichen. Damit nun das Auf- und Absteigen und Pendeln des Kreiselkörpers und seiner Drallachse zur Ruhe kommen kann, bedarf es einer Dämpfungskonstruktion.

Gemäß dem Stand der Technik ist bereits eine große Anzahl von Ausführungen von bandgehängten Meridiankreiseln bekannt. Beispielhaft wird auf DE 1 284 549 A, DE 15 48 465 A1, DE 17 98 049 B2, DE 20 07 736 A, DE 40 23 349 A1 und DE 27 34 319 A1 verwiesen. Diese weisen unterschiedliche Dämpfungssysteme wie z.B. Gas- oder Flüssigkeitsdämpfung, magnetische sowie elektrostatische Dämpfung und auch mechanische Dämpfungssysteme auf.

Als nächstkommender Stand der Technik wird von DE 1 284 639 A ausgegangen.

Nachteilig am Stand der Technik ist, dass diese keine vollständig autonomen Systeme darstellen, eine störanfällige und komplexe Mechanik und/oder Auswerteelektronik benötigen und in der Zeitdauer der Nordfindung sowie der Präzision derselben verbesserungsfähig sind.

Die Aufgabe der vorliegenden Erfindung liegt nunmehr darin, einen Meridiankreisel zu liefern, der eine schnelle Nordfindung mit hoher Präzision und ohne unterstützende Elektronik ermöglicht und dabei insbesondere vollmechanisch arbeitet und der von magnetischen und/oder elektrischen Störungen unbeeinflussbar ist.

Diese Aufgabe wird gelöst durch einen bandgehängten vollmechanischen Meridiankreisel gemäß Anspruch 1. Vorteilhafte Ausgestaltungen finden sich in den abhängigen Ansprüchen.

Der erfindungsgemäße vollmechanische Meridiankreisel bekommt dabei gemäß einer Ausführungsform der vorliegenden Erfindung einen einmaligen Energiestoß, der ausreichend stark ist und ein genügend großes Richtmoment ermöglicht. Die darauf folgenden Pendelungen des Nordsuchlaufs werden dann erfindungsgemäß rein mechanisch an Nord herangeführt, und danach kann eine Ablesung von Nord, insbesondere analog, vorgenommen werden, d.h. der erfindungsgemäße Meridiankreisel ermöglicht die klassische Theodolit-Auslesung.

Mittels der erfindungsgemäßen vollmechanischen Meridiankreisels ist zudem ein hochgenaues Auslesen von Nord von 20" und weniger möglich, wobei elektrisch bzw. elektronisch bedingte Ausfälle entfallen.

Der vollständige Wegfall immer komplexerer Antriebe und Sensoren sowie der notwendigen Rechnerleistung bei dem erfindungsgemäßen Kreisel lässt die Herstellkosten erheblich sinken. Zugleich werden mögliche Störungen (Energieversorgung, elektronische Störungen aller Art, sowie auch Magnetfeldstörungen) unmöglich, da der erfindungsgemäße Kreisel gemäß einer Ausführungsform aus Werkstoffen hergestellt sein kann, die von Magnetfeldstörungen nicht betroffen sind. Der gesamte Kreisel kann dabei gemäß einer bevorzugten Ausführungsform ein amagnetisches System darstellen. Nordund Azimutfindung und damit auch vollkommene Autonomie in diesem Bereich (GPS-Unabhängigkeit) werden mittels des erfindungsgemäßen Meridiankreisels ermöglicht. Erfindungsgemäß kommen dabei n, mit n = 1, 2, 3, 4, 5, 6, 7, 8, 9, 10, oder mehr, Pendelkörper zum Einsatz, die auf einer Anzahl von m, mit m = 1, 2, 3, 4, 5, 6, 7, 8, 9, 10 oder mehr, konzentrischer Kreise mit in unterschiedlichen Radien um einen durch das Tragbar gebildeten Kreismittelpunkt angeordnet sind. Konzentrische Kreise bedeutet dabei vorliegend ausschließlich eine räumliche Orientierung und nicht ein Vorliegen von Kreisen als solchen. Dabei können die n Pendelkörper in einem jeweiligen Winkel α versetzt um den Kreismittelpunkt der m konzentrischen Kreise angeordnet sein.

Dabei kann es insbesondere vorgesehen sein, dass die Pendelkörper jedes der m konzentrischen Kreise in dem oder den gleichen Winkeln bezogen auf den besagten Kreismittelpunkt angeordnet sind, um eine symmetrische Anordnung auszubilden. Dabei kann insbesondere vorgesehen sein, dass auf jedem der m konzentrischen Kreise 2, 4, oder 8 Pendelkörper angeordnet sind. Auch kann es erfindungsgemäß bevorzugt sein, dass die Pendelkörper auf jedem der m konzentrischen Kreise in einem jeweiligen Winkel von 360/n zum nächsten der n Pendelkörper angeordnet sind.

Für eine Nordfindung wird nunmehr der in dem Kreiselgehäuse angeordnete Kreisel in Rotation versetzt und auf eine hohe Drehzahl gebracht. Dabei bildet der Kreisel einen Auslaufkreisel, dessen Laufzeit im entvakuumierten Zustand mehr als eine Stunde betragen kann, und der sich nach Nord drehend zu bewegen beginnt. Um ein über Nord hinausgehendes Drehen zu stoppen, wird auf die erfindungsgemäßen Pendelkörper zurückgegriffen, die zur weitern Dämpfung einer Bewegung des Kreisels mit einem weiteren Element zumindest zeitweise in Wirkverbindung gebracht werden können. Durch die erfindungsgemäßen Pendelkörper, insbesondere deren Anordnung und Anzahl, sowie deren Abstand zu dem besagten weiteren Element, ist es möglich, die Dämpfung des Kreiselkörpers einzustellen und somit die Zeitdauer der Nordfindung zu verkürzen. Der Kreisel benötigt dabei keine elektrische Energie für die Nordfindung, vielmehr kann ein Auslesen des Messwerts beispielsweise wie bei einem Theodoliten mit Hilfe eines Ablesefernrohres und einer Glasskala erfolgen. Dem Fachmann sind dabei eine Vielzahl von Ableseverfahren und Einrichtungen geläufig, insbesondere auch eine Vielzahl optischer Verfahren, die keiner elektronischer Hilfsmittel bedürfen.

Dabei kann es gemäß einer Ausführungsform der vorliegenden Erfindung vorteilhaft sein, dass zwischen der Kreiselkappe und dem Tragband ein Kreiselmast angeordnet ist, der fest, insbesondere mittels einer unteren ersten Bandklemme, mit den Tragband und mit der Kreiselkappe verbunden ist, und wobei das Tragband insbesondere mit einer oberen zweiten Bandklemme mit dem Axial-Rillenkugellager, insbesondere mit einer oberen Lagerschale des Axial-Rillenkugellagers, direkt oder indirekt fest verbunden ist.

Es ist dabei für einen Fachmann offensichtlich, dass eine feste Verbindung von dem Tragband und dem Kreiselmast bzw. von dem Tragband mit dem Kugellager mit verschiedensten Befestigungsmitteln und Verfahren möglich ist. Neben der bevorzugten Bandklemme können diese beispielsweise auch mittels eines Klebemittels verbunden werden, verschweißt werden, etc.

Erfindungsgemäß kann es bevorzugt sein, dass die Kreiselkappe einen Hohlkörper ausbildet, wobei die Kreiselkappe insbesondere gasdicht ausgebildet ist und vorzugsweise mittels einer gasdicht verschließbaren Aussparung evakuiert werden kann und/oder mittels eines Füllmaterials, insbesondere teilweise, ausgefüllt ist.

Durch eine solche Evakuierung des Hohlkörpers kann erreicht werden, dass die Rotation des Kreisels verbessert wird. Ein teilweises Füllen der Kreiselkappe führt zu einem geringeren verbleibenden Volumen im Inneren, welches sich schneller und einfacher evakuieren lässt.

Auch kann vorgesehen sein, dass eine Antriebseinrichtung umfasst ist, die mittels einer Antriebswelle mit einem Kraftübertragungsbereich, der von der Kreiselkappe umfasst ist, in Wirkverbindung bringbar ist oder steht, wobei die Antriebseinrichtung ausgelegt und eingerichtet ist, um den Kreisel zu rotieren.

Erfindungsgemäß ist eine plattenförmige Einrichtung umfasst, die unterhalb des mindestens einen Pendelkörpers angeordnet ist, insbesondere eine Reibeplatte, wobei die plattenförmige Einrichtung zumindest zeitweise in Wirkverbindung mit dem mindestens einen Pendelkörper steht oder bringbar ist, so dass eine Rotation und/oder eine Schwingung der Kreiselkappe dämpfbar ist bzw. gedämpft wird.

Dabei kann es vorteilhaft sein, dass der Abstand der plattenförmigen Einrichtung mit Bezug auf das untere Ende der Kreiselkappe veränderbar ist, insbesondere mittels einer ersten Abstandsänderungseinrichtung.

Durch eine erfindungsgemäße plattenförmige Einrichtung kann somit ein Dämpfen der Rotation und/oder einer Schwingung der Kreiselkappe erfolgen. Gerade diese Dämpfung ist von entscheidender Bedeutung, da darüber die Empfindlichkeit des Nordungsvorgangs festlegbar ist. Die Einstellung der Dämpfung resultiert daher in einer Änderung der Suchlaufzeit als auch der Suchgenauigkeit.

Mittels der mit der plattenförmigen Einrichtung in Wirkverbindung stehenden Pendelkörper kann dabei ein sehr feines Einstellen der gewünschten Dämpfungswirkung durch die Auswahl der Anzahl und der Anordnung der Pendelkörper erreicht werden. Bei einer Schwingung der Kreiselkappe tritt zudem der Effekt auf, dass nicht grundsätzlich alle Pendelkörper mit der plattenförmigen Einrichtung in Wirkverbindung treten, sondern je nach Ausschlag der Schwingung auch eine Teilmenge derselben. Die Anzahl der in Wirkverbindung tretenden Pendelkörper in Abhängigkeit von dem Ausschlag der Schwingung kann auch durch die Ausgestaltung der Geometrie der plattenförmigen Einrichtung definiert werden.

Eine weitere Einstellmöglichkeit der Dämpfung resultiert aus dem Einstellen des Abstands der plattenförmigen Einrichtung von dem unteren Ende der Kreiselkappe. Je geringer der Abstand, desto größer wird die Dämpfung.

Erfindungsgemäß ist es somit möglich, durch mehrere Parameter, wie die Anzahl und Anordnung der Pendelkörper, die Geometrie der plattenförmigen Einrichtung und deren Abstand von der Kreiselkappe die Reibung zwischen den Pendelkörper und der plattenförmigen Einrichtung festzulegen und somit eine gewünschte Dämpfung einzustellen.

Gemäß einer Ausführungsform der Erfindung kann es bevorzugt sein, dass
der Abstand des Kugellagers vom oberen Ende des Kreiselgehäuses veränderbar ist, insbesondere mittels einer zweiten Abstandsänderungseinrichtung.

Eine solche Änderung des Abstands der Kreiselkappe von dem oberen Ende des Kreiselgehäuses führt dazu, dass ein freies Schwingen der Kreiselkappe in dem Gehäuse ermöglicht wird, in dem der erfindungsgemäße Meridiankreisel von einer Ruheposition, in der beispielsweise die Pendelkörper auf der plattenförmigen Einrichtung aufliegen, in eine Betriebsposition überführbar ist oder überführt wird.

Hierbei ist es vorteilhaft, wenn durch die Entriegelung keine Impulse auf den Kreisel übertragen werden, die eine Nordfindung mittels desselben verzögern, da diese zunächst kompensiert werden müssen.

Der verriegelte Kreisel selbst wird zunächst auf die nötige Drehzahl gebracht und von der externen Kraftquelle entkoppelt. Nun wird mittels der zweiten Abstandsänderungseinrichtung angehoben und der in Rotation versetzen Kreisel wird ohne Störung durch den externen Antrieb durch Anheben entriegelt.

Dabei kann es daher insbesondere vorteilhaft sein, dass die mindestens eine erste und/ oder die mindestens eine zweite Abstandsänderungseinrichtung ausgelegt und eingerichtet ist, um eine Abstandsänderung stoßfrei und ohne konischen Effekt zu ermöglichen.

Auch kann es vorteilhaft sein, dass die mindestens eine zweite Abstandsänderungseinrichtung einen ersten Führungsstift umfasst, auf dem das Kugellager direkt und/oder indirekt aufliegt, wobei der erste Führungsstift in einer ersten schräg verlaufenden Aussparung verläuft, deren erstes Ende weiter von dem oberen Ende des Kreiselgehäuses beabstandet ist als ein gegenüberliegendes zweites Ende der Aussparung, wobei insbesondere das Axial-Rillenkugellager eine senkrecht angeordnete Aussparung in Form einer Vertikalnut umfasst, in die ein von dem Kreiselgehäuse ausgebildeter oder in dem Kreiselgehäuse bereitgestellten Vorsprung eingreift, um eine Drehbewegung des Kugellagers zu unterbinden.

Bevorzugt kann dabei auch sein, dass die mindestens eine erste Abstandsänderungseinrichtung einen zweiten Führungsstift umfasst, auf dem die plattenförmige Einrichtung direkt und/oder indirekt aufliegt, wobei der zweite Führungsstift in einer zweiten schräg verlaufenden Aussparung verläuft, deren erstes Ende weiter von dem unteren Ende des Kreiselgehäuses beabstandet ist als ein gegenüberliegendes zweites Ende der Aussparung.

Es hat sich gezeigt, dass durch eine solche Ausgestaltung der Abstandsänderungseinrichtungen ein stoßfreies Ändern des Abstands ohne konischen Effekt realisiert werden kann.

Auch liefert die Erfindung eine Verwendung eines erfindungsgemäßen Meridiankreisels zur Nordfindung im Tunnel- oder Straßenbau, im Bergbau, bei Flugzeugen bzw. Flugkörpern, und/oder im Automobilbereich.

Weitere Merkmale und Vorteile der Erfindung ergeben sich aus der nachfolgenden Beschreibung, in der weitere Ausführungsbeispiele der Erfindung anhand von schematischen Zeichnungen beispielhaft erläutert wird, ohne dadurch die Erfindung zu beschränken.

Dabei zeigt:

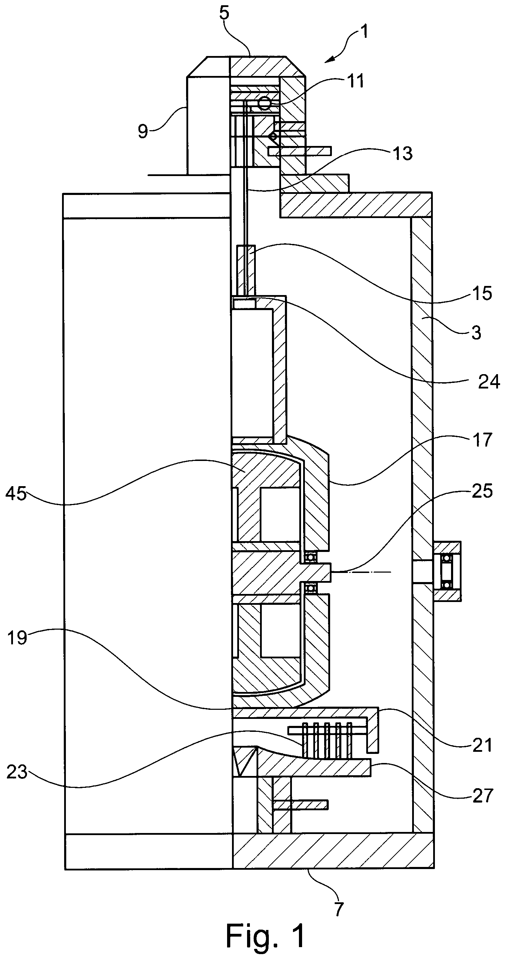

- Figur 1:: eine schematische (Teil-) Schnittansicht eines erfindungsgemäßen Meridiankreisels;
- Figur 2:: eine schematische (Teil-) Schnittansicht eines oberen Bereichs eines erfindungsgemäßen Meridiankreisels;
- Figur 3:: eine schematische (Teil-) Schnittansicht eines Dämpfungsbereichs eines erfindungsgemäßen Meridiankreisels; und
- Figur 4:: eine schematische Schnittansicht des Dämpfungsbereichs eines erfindungsgemäßen Meridiankreisels.

Die Figuren zeigen dabei ein Ausführungsbeispiel eines bandgehängten vollmechanischen Meridiankreisel 1 mit einem Kreiselgehäuse 3, welches ein oberes Ende 5 sowie ein dem oberen Ende 5 gegenüberliegendes unteres Ende 7 aufweist.

Das Kreiselgehäuse 3 umfasst im Bereich seines oberen Endes 5 einen ersten hohlzylinderförmigen Abschnitt 9. In dem hohlzylinderförmigen Abschnitt 9 ist ein Kugellager 11, gezeigt in Form eines Axial-Rillenkugellagers, angeordnet. Der Meridiankreisel 1 umfasst weiterhin ein Tragband 13, das zentrisch durch die Wellenführung des Kugellagers 11 geführt und mit diesem sowie mit einer unterhalb des ersten hohlzylinderförmigen Abschnitts 9 angeordnetem Kreiselkappe 17 direkt verbunden ist.

Zwischen der Kreiselkappe 17 und dem Tragband 13 ist ein Kreiselmast 15 angeordnet ist, der fest mittels einer unteren ersten Bandklemme 24 mit den Tragband 13 und mit der Kreiselkappe 17 verbunden ist. Das Tragband 13 ist dabei mit einer oberen zweiten Bandklemme 35 mit dem Kugellager 11 verbunden.

Am unteren Ende 19 der Kreiselkappe 17 ist eine Halterungseinrichtung 21 angeordnet, die mehrere Pendelkörper 23 umfasst, die vertikal zu der Kreiselkappe 17 verschiebbar und in einer horizontalen Ebene bezogen auf Kreiselkappe 17 drehbar gelagert sind.

Die gezeigte Kreiselkappe 17 bildet einen Hohlkörper aus, in dem der Kreisel 45 angeordnet ist, wobei die Kreiselkappe 17 fluiddicht ausgebildet ist und mittels einer Aussparung evakuiert werden kann. Nicht gezeigt kann alternativ oder zusätzlich die Kreiselkappe 17 mittels eines Füllmaterials ausgefüllt sein.

Eine nicht gezeigte Antriebseinrichtung kann dabei umfasst sein, die mittels einer Antriebswelle (nicht gezeigt) mit einem Kraftübertragungsbereich 25, der von der Kreiselkappe 17 umfasst ist, in Wirkverbindung bringbar ist, um den in der Kreiselkappe 17 angeordneten Kreisel 45 in Rotation zu versetzen.

Eine plattenförmige Einrichtung 27 ist dabei unterhalb der Pendelkörper 23 angeordnet und bildet eine Reibeplatte aus, so dass eine Rotation und/oder eine Schwingung der Kreiselkappe 17 durch eine Wirkverbindung zwischen Pendelkörper 23 und Reibeplatte 27 gedämpft wird.

Dabei ist der Abstand der plattenförmigen Einrichtung 27 mit Bezug auf das untere Ende 19 der Kreiselkappe 17 veränderbar, insbesondere mittels der gezeigten ersten Abstandsänderungseinrichtung.

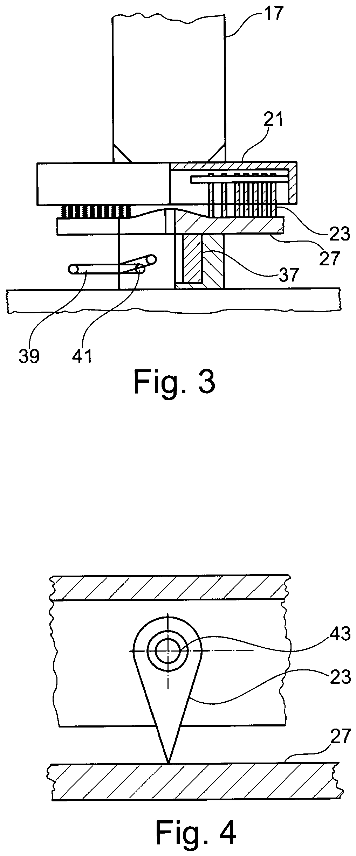

Die erste Abstandsänderungseinrichtung, insbesondere in Figur 3 deutlich gezeigt, umfasst einen zweiten Führungsstift 39, auf dem die plattenförmige Einrichtung 27 direkt und/oder indirekt aufliegt. Der zweite Führungsstift 39 ist dabei in einer zweiten schräg verlaufenden Aussparung 41 angeordnet, deren erstes Ende weiter von dem unteren Ende 7 des Kreiselgehäuses 3 beabstandet ist als ein gegenüberliegendes zweites Ende der Aussparung 41.

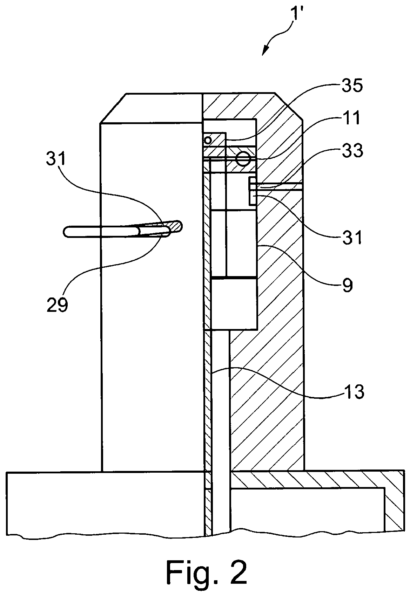

Ebenso ist der Abstand des Kugellagers 11 vom oberen Ende 5 des Kreiselgehäuses 3 veränderbar, insbesondere mittels einer zweiten Abstandsänderungseinrichtung. Diese zweite Abstandsänderungseinrichtung ist insbesondere in Figur 2 deutlich sichtbar. Die zweite Abstandsänderungseinrichtung umfasst einen ersten Führungsstift 29, auf dem das Kugellager 11 direkt und/oder indirekt aufliegt. Der erste Führungsstift 29 verläuft dabei, wie gezeigt, in einer ersten schräg verlaufenden Aussparung 31, deren erstes Ende weiter von dem oberen Ende 5 des Kreiselgehäuses 3 beabstandet ist als ein gegenüberliegendes zweites Ende der Aussparung.

Das Kugellager 11 umfasst dabei eine senkrecht angeordnete Aussparung 31, in die ein von dem Kreiselgehäuse 3 bereitgestellter Vorsprung 33 eingreift, um eine Drehbewegung des Kugellagers 11 zu unterbinden.

Dabei ist die erste und die zweite Abstandsänderungseinrichtung gemäß dem gezeigten Ausführungsbeispiel ausgelegt und eingerichtet ist, um eine Abstandsänderung stoßfrei und ohne konischen Effekt zu ermöglichen.

## Patentansprüche

1. Bandgehängter vollmechanischer Meridiankreisel (1) mit einem Kreiselgehäuse (3), welches ein oberes Ende (5) sowie ein dem oberen Ende (5) gegenüberliegendes unteres Ende (7) aufweist, wobei das Kreiselgehäuse (3) im Bereich seines oberen Endes (5) einen ersten hohlzylinderförmigen Abschnitt (9) umfasst, in dem mindestens ein Kugellager (11), insbesondere ein Axial-Rillenkugellager,
angeordnet ist, wobei der Meridiankreisel (1) weiterhin ein Tragband (13) umfasst, das zentrisch durch die Wellenführung des Kugellagers (11) geführt ist und mit diesem sowie mit einer unterhalb des ersten hohlzylinderförmigen Abschnitts (9) angeordnetem Kreiselkappe (17) direkt oder indirekt, insbesondere fest, verbunden ist, wobei am unteren Ende oder im Bereich des unteren Endes (19) der Kreiselkappe (17) eine mit der Kreiselkappe (17) fest verbundene Halterungseinrichtung (21) umfasst ist, wobei von der Halterungseinrichtung (21) mindestens ein Pendelkörper (23) umfasst ist, der vertikal zu der Kreiselkappe (17) verschiebbar und in einer horizontalen Ebene bezogen auf Kreiselkappe (17) drehbar gelagert ist, **dadurch gekennzeichnet, dass** eine plattenförmige Einrichtung (27) umfasst ist, die unterhalb des mindestens einen Pendelkörpers (23) angeordnet ist, wobei die plattenförmige Einrichtung (27) zumindest zeitweise in Wirkverbindung mit dem mindestens einen Pendelkörper (23) steht oder bringbar ist, so dass eine Rotation und/oder eine Schwingung der Kreiselkappe (17) dämpfbar ist bzw. gedämpft wird.

2. Meridiankreisel nach Anspruch 1, **dadurch gekennzeichnet, dass**
zwischen der Kreiselkappe (17) und dem Tragband (13) ein Kreiselmast (15) angeordnet ist, der fest, insbesondere mittels einer ersten Bandklemme (24), mit den Tragband (13) und mit der Kreiselkappe (17) verbunden ist, und wobei das Tragband (13) insbesondere mit einer zweiten Bandklemme (35) mit dem Axial-Rillenkugellager (11), insbesondere mit einer oberen Lagerschale des Axial-Rillenkugellagers (11), direkt oder indirekt fest verbunden ist.

3. Meridiankreisel nach Anspruch 1 oder Anspruch 2, **dadurch gekennzeichnet, dass** die Kreiselkappe (17) einen Hohlkörper ausbildet, wobei die Kreiselkappe (17) insbesondere gasdicht ausgebildet ist und vorzugsweise mittels einer gasdicht verschließbaren Aussparung evakuiert werden kann und/oder mittels eines Füllmaterials, insbesondere teilweise, ausgefüllt ist.

4. Meridiankreisel nach einem der vorangehenden Ansprüche, **dadurch gekennzeichnet, dass**
eine Antriebseinrichtung umfasst ist, die mittels einer Antriebswelle mit einem Kraftübertragungsbereich (25), der von der Kreiselkappe (17) umfasst ist, in Wirkverbindung bringbar ist oder steht, wobei die Antriebseinrichtung ausgelegt und eingerichtet ist, um den in der Kreiselkappe (17) angeordneten Kreisel zu rotieren.

5. Meridiankreisel nach einem der vorangehenden Ansprüche, **dadurch gekennzeichnet, dass**
die plattenförmige Einrichtung (27) eine Reibeplatte ist.

6. Meridiankreisel nach Anspruch 5, **dadurch gekennzeichnet, dass**
der Abstand der plattenförmigen Einrichtung (27) mit Bezug auf das untere Ende (19) der Kreiselkappe (17) veränderbar ist, insbesondere mittels einer ersten Abstandsänderungseinrichtung.

7. Meridiankreisel nach einem der vorangehenden Ansprüche, **dadurch gekennzeichnet, dass**
der Abstand des Kugellagers (11) vom oberen Ende(5)des Kreiselgehäuses (3) veränderbar ist, insbesondere mittels einer zweiten Abstandsänderungseinrichtung.

8. Meridiankreisel nach einem der Ansprüche 6 oder 7, **dadurch gekennzeichnet, dass** die mindestens eine erste und/oder die mindestens eine zweite Abstandsänderungseinrichtung ausgelegt und eingerichtet ist, um eine Abstandsänderung stoßfrei und ohne konischen Effekt zu ermöglichen.

9. Meridiankreisel nach einem der Ansprüche 6 bis 8, **dadurch gekennzeichnet, dass** die mindestens eine zweite Abstandsänderungseinrichtung einen ersten Führungsstift (29) umfasst, auf dem das Kugellager (11) direkt und/oder indirekt aufliegt, wobei der erste Führungsstift (29) in einer ersten schräg verlaufenden Aussparung (31) verläuft, deren erstes Ende weiter von dem oberen Ende (5) des Kreiselgehäuses (3) beabstandet ist als ein gegenüberliegendes zweites Ende der Aussparung, wobei insbesondere das Kugellager (11) eine senkrecht angeordnete Aussparung (31) umfasst, in die ein von dem Kreiselgehäuse (3) ausgebildeter oder in dem Kreiselgehäuse (3) bereitgestellter Vorsprung (33) eingreift, um eine Drehbewegung des Kugellagers (11) zu unterbinden.

10. Meridiankreisel nach einem der Ansprüche 6 bis 9, **dadurch gekennzeichnet, dass** die mindestens eine erste Abstandsänderungseinrichtung einen zweiten Führungsstift (39) umfasst, auf dem die plattenförmige Einrichtung (27) direkt und/ oder indirekt aufliegt, wobei der zweite Führungsstift (39) in einer zweiten schräg verlaufenden Aussparung (41)verläuft, deren erstes Ende weiter von dem unteren Ende (7) des Kreiselgehäuses (3) beabstandet ist als ein gegenüberliegendes zweites Ende der Aussparung (41) .

11. Meridiankreisel nach einem der vorangehenden Ansprüche, **dadurch gekennzeichnet, dass**
der Meridian-Kreisel aus nicht-magnetischen Materialien besteht.

12. Verwendung eines Meridiankreisels nach einem der vorangehenden Ansprüche zur Nordfindung im Tunnel- oder Straßenbau, im Bergbau, bei Flugzeugen bzw. Flugkörpern, und/oder im Automobilbereich.

## Claims

1. Tape-suspended fully mechanical meridian gyroscope (1) with a gyroscope housing (3) which has an upper end (5) and a lower end (7) opposite the upper end (5), wherein the gyroscope housing (3) in the region of its upper end (5) comprises a first hollow-cylindrical section (9) in which at least one ball bearing (11), in particular an axial deep groove ball bearing, is arranged, wherein the meridian gyroscope (1) furthermore comprises a support tape (13) which is guided centrally through the shaft guide of the ball bearing (11) and is directly or indirectly, in particular fixedly, connected to the latter and to a gyroscope cap (17) arranged below the first hollow-cylindrical section (9), wherein a holding device (21) which is fixedly connected to the gyroscope cap (17) is included at the lower end or in the region of the lower end (19) of the gyroscope cap (17), wherein the holding device (21) includes at least one pendulum body (23) which is mounted displaceably vertically with respect to the gyroscope cap (17) and rotatably in a horizontal plane with respect to the gyroscope cap (17), **characterized in that** a plate-like device (27) is included which is arranged below the at least one pendulum body (23), wherein the plate-like device (27) is in, or can be brought at least temporarily into, operative connection with the at least one pendulum body (23) such that a rotation and/or a vibration of the gyroscope cap (17) can be damped or is damped.

2. Meridian gyroscope according to Claim 1, **characterized in that** a gyroscope mast (15) is arranged between the gyroscope cap (17) and the support tape (13) and is connected fixedly, in particular by means of a first tape clamp (24), to the support tape (13) and to the gyroscope cap (17), and wherein the support tape (13) is directly or indirectly fixedly connected, in particular with a second tape clamp (35), to the axial deep groove ball bearing (11), in particular to an upper bearing shell of the axial deep groove ball bearing (11).

3. Meridian gyroscope according to Claim 1 or Claim 2, **characterized in that** the gyroscope cap (17) forms a hollow body, wherein the gyroscope cap (17) is in particular gas-tight and, preferably by means of a recess which is closeable gas-tightly, can be evacuated and/or filled, in particular partially, by means of a filling material.

4. Meridian gyroscope according to one of the preceding claims, **characterized in that** a drive device is included which can be brought into, or is in, operative connection by means of drive shaft with a force transmission region (25) enclosed by the gyroscope cap (17), wherein the drive device is designed and configured to rotate the gyroscope arranged in the gyroscope cap (17).

5. Meridian gyroscope according to one of the preceding claims, **characterized in that** the plate-like device (27) is a rubbing plate.

6. Meridian gyroscope according to Claim 5, **characterized in that** the distance of the plate-like device (27) with respect to the lower end (19) of the gyroscope tap (17) can be changed, in particular by means of a first distance-changing device.

7. Meridian gyroscope according to one of the preceding claims, **characterized in that** the distance of the ball bearing (11) from the upper end (5) of the gyroscope housing (3) can be changed, in particular by means of a second distance-changing device.

8. Meridian gyroscope according to either of Claims 6 and 7, **characterized in that** the at least one first and/or the at least one second distance-changing device is designed and configured to permit a change in distance without jolting and without a conical effect.

9. Meridian gyroscope according to one of Claims 6 to 8, **characterized in that** the at least one second distance-changing device comprises a first guide pin (29) on which the ball bearing (11) directly and/or indirectly rests, wherein the first guide pin (29) runs in a first obliquely running recess (31), the first end of which is spaced further from the upper end (5) of the gyroscope housing (3) than an opposite second end of the recess, wherein, in particular, the ball bearing (11) comprises a vertically arranged recess (31) in which a projection (33) formed by the gyroscope housing (3) or provided in the gyroscope housing (3) engages in order to prevent a rotational movement of the ball bearing (11).

10. Meridian gyroscope according to one of Claims 6 to 9, **characterized in that** the at least one first distance-changing device comprises a second guide pin (39) on which the plate-like device (27) directly and/or indirectly rests, wherein the second guide pin (39) runs in a second obliquely running recess (41), the first end of which is spaced further from the lower end (7) of the gyroscope housing (3) than an opposite second end of the recess (41).

11. Meridian gyroscope according to one of the preceding claims, **characterized in that** the meridian gyroscope is composed of non-magnetic materials.

12. Use of a meridian gyroscope according to one of the preceding claims for finding north in tunnel or road construction, in mining, in the case of aircraft or missiles, and/or in the automotive sector.

## Revendications

1. Gyroscope méridien (1) entièrement mécanique suspendu à un ruban, comportant un boîtier de gyroscope (3), lequel comprend une extrémité supérieure (5) ainsi qu'une extrémité inférieure (7) opposée à l'extrémité supérieure (5), le boîtier de gyroscope (3) comprenant, dans la région de son extrémité supérieure (5), une partie (9) de forme cylindrique creuse, dans laquelle est disposé au moins un palier à billes (11), en particulier un palier axial rainuré à billes, le gyroscope méridien (1) comportant en outre un ruban de support (13) qui est guidé de manière centrée à travers le guidage d'arbre du palier à billes (11) et est relié directement ou indirectement, en particulier fixement, à ce palier ainsi qu'à un couvercle de gyroscope (17) disposé en dessous de la première partie (9) de forme cylindrique creuse, un dispositif de retenue (21) relié fixement au couvercle de gyroscope (17) étant compris à l'extrémité inférieure ou dans la région de l'extrémité inférieure (19) du couvercle de gyroscope (17), au moins un corps de pendule (23) étant entouré par le dispositif de retenue (21), lequel corps est monté de manière déplaçable verticalement par rapport au couvercle de gyroscope (17) et de manière rotative dans un plan horizontal par rapport au couvercle de gyroscope (17), **caractérisé en ce qu'**un dispositif (27) en forme de plaque est compris, lequel est disposé en dessous de l'au moins un corps de pendule (23), le dispositif (27) en forme de plaque étant ou pouvant être amené au moins temporairement en liaison fonctionnelle avec l'au moins un corps de pendule (23), de sorte qu'une rotation et/ou une vibration du couvercle de gyroscope (17) puissent être amorties ou soient amorties.

2. Gyroscope méridien selon la revendication 1, **caractérisé en ce**
**qu'**un mât de gyroscope (15) est disposé entre le couvercle de gyroscope (17) et le ruban de support (13), lequel mât est relié fixement ruban de support (13) et au couvercle de gyroscope (17), en particulier au moyen d'un premier élément de serrage de ruban (24), et le ruban de support (13) étant relié fixement directement ou indirectement, en particulier à l'aide d'un deuxième élément de serrage de ruban (35), au palier axial rainuré à billes (11), en particulier à un coussinet de palier supérieur du palier axial rainuré à billes (11).

3. Gyroscope méridien selon la revendication 1 ou la revendication 2, **caractérisé en ce que**
le couvercle de gyroscope (17) forme un corps creux, le couvercle de méridien (17) étant réalisé en particulier de manière étanche aux gaz et le vide pouvant être créé dans le couvercle de gyroscope de préférence au moyen d'un évidement refermable étanche aux gaz et/ou le couvercle de gyroscope étant rempli, en particulier partiellement, d'une matière de remplissage.

4. Gyroscope méridien selon l'une des revendications précédentes, **caractérisé en ce**
**qu'**un dispositif d'entraînement est compris, lequel peut être amené ou est en liaison fonctionnelle, au moyen d'un arbre d'entraînement, avec une région de transmission de force (25) qui est entourée par le couvercle de gyroscope (17), le dispositif d'entraînement étant configuré et conçu pour faire tourner le gyroscope disposé dans le couvercle de gyroscope (17).

5. Gyroscope méridien selon l'une des revendications précédentes, **caractérisé en ce que**
le dispositif (27) en forme de plaque est une plaque de friction.

6. Gyroscope méridien selon la revendication 5, **caractérisé en ce que**
la distance du dispositif (27) en forme de plaque par rapport à l'extrémité inférieure (19) du couvercle de gyroscope (17) peut être modifiée, en particulier au moyen d'un premier dispositif de modification de distance.

7. Gyroscope méridien selon l'une des revendications précédentes, **caractérisé en ce que**
la distance du palier à billes (11) à partir de l'extrémité supérieure (5) du boîtier de gyroscope (3) peut être modifiée, en particulier au moyen d'un deuxième dispositif de modification de distance.

8. Gyroscope méridien selon l'une des revendications 6 et 7, **caractérisé en ce que**
l'au moins un premier et/ou l'au moins un deuxième dispositif de modification de distance sont configurés et conçus pour permettre une modification de distance sans choc et sans effet conique.

9. Gyroscope méridien selon l'une des revendications 6 à 8, **caractérisé en ce que**
l'au moins un deuxième dispositif de modification de distance comporte une première goupille de guidage (29) sur laquelle le palier à billes (11) repose directement et/ou indirectement, la première goupille de guidage (29) s'étendant dans un premier évidement (31) s'étendant de manière oblique, évidement dont la première extrémité est espacée davantage de l'extrémité supérieure (5) du boîtier de gyroscope (3) qu'une deuxième extrémité opposée de l'évidement, le palier à billes (11) comportant en particulier un évidement (31) disposé perpendiculairement, dans lequel vient en prise une saillie (33) formée par le boîtier de gyroscope (3) ou fournie dans le boîtier de gyroscope (3), afin d'empêcher un mouvement rotatif du palier à billes (11).

10. Gyroscope méridien selon l'une des revendications 6 à 9, **caractérisé en ce que**
l'au moins un premier dispositif de modification de distance comporte une deuxième goupille de guidage (39) sur laquelle le dispositif (27) en forme de plaque repose directement et/ou indirectement, la deuxième goupille de guidage (39) s'étendant dans un deuxième évidement (41) s'étendant de manière oblique, évidement dont la première extrémité est espacée davantage de l'extrémité inférieure (7) du boîtier de gyroscope (3) qu'une deuxième extrémité opposée de l'évidement (41).

11. Gyroscope méridien selon l'une des revendications précédentes, **caractérisé en ce que**
le gyroscope méridien est constitué de matières non magnétiques.

12. Utilisation d'un gyroscope méridien selon l'une des revendications précédentes pour trouver le nord dans des constructions de tunnels ou routières, dans l'exploitation des mines, dans des aéronefs ou des missiles et/ou dans le secteur automobile.
